# EUROPEAN PATENT APPLICATION

(11) **EP 2 418 117 A2**
(43) Date of publication of application: **15.02.2012**
(21) Application number: 11175408.1
(22) Date of filing: 26.07.2011
(51) Int. Cl.: B60L 11/18

(54) **Transportation vehicle system and charging method for the transportation vehicle system**

(30) Priority: 09.08.2010 JP 2010178463
(71) Applicant: Murata Machinery, Ltd., Kyoto-shi, Kyoto 6018326 (JP)
(72) Inventor: Hayashi, Takao, Inuyama-shi, Aichi 484-8502 (JP)
(74) Representative: Stöckeler, Ferdinand

(57) **Abstract**

A plurality of transportation vehicles travel along a predetermined travel route under control of a ground controller. Each of the traveling vehicles is configured to travel using an energy storage member as a power supply. A charging area having charging equipment for charging the energy storage member of the transportation vehicle is provided in the travel route. Each of the transportation vehicles reports a position and remaining capacity of the energy storage member to the ground controller. The ground controller controls a transportation vehicle having remaining capacity of a threshold value or less to travel to the charging area for charging the energy storage member. Further, the ground controller controls transportation vehicles in the charging area to travel to positions outside the charging area in accordance with transportation requests.

## Description

### Background of the Invention

### Field of the Invention

The present invention relates to a transportation vehicle system. In particular, the present invention relates to a system of transportation vehicles that travel using secondary batteries.

### Description of the Related Art

Rechargeable secondary batteries are mounted on overhead traveling vehicles, rail vehicles, automated transportation vehicles or the like to use the rechargeable secondary batteries as power supplies on the vehicles. In this regard, Patent Publication 1 (JPH05-207611A) proposed to provide a battery replacement machine for replacing batteries of the overhead traveling vehicles. For the transportation vehicle system using the second batteries, a system that can reliably control the state of charge (remaining capacity) of the battery, and minimize the loss time due to charging of the transportation vehicles is required.

### Summary of the Invention

An object of the present invention is to provide a system in which charging of transportation vehicles can be performed efficiently.

The present invention relates to a system for allowing a plurality of transportation vehicles to travel along a predetermined travel route under control of a ground controller. Each of the traveling vehicles is configured to travel using an energy storage member as a power supply.
A charging area having charging equipment for charging the energy storage member of the transportation vehicle is provided in the travel route.
The transportation vehicle has communication means for reporting a position and remaining capacity of the energy storage member to the ground controller.
The ground controller has a charge control unit for controlling a transportation vehicle having remaining capacity of a threshold value or less to travel to the charging area for charging the energy storage member, and a vehicle placement control unit for controlling transportation vehicles in the charging area to travel to positions outside the charging area.

Further, the present invention relates to a charging method for a transportation system for allowing a plurality of transportation vehicles to travel along a predetermined travel route under control of a ground controller. Each of the transportation vehicles is configured to travel using an energy storage member as a power supply.
A charging area having charging equipment for charging the energy storage member of the transportation vehicle is provided in the travel route.
The method includes the steps of:
reporting a position and remaining capacity of the energy storage member to the ground controller by the transportation vehicle;
controlling a transportation vehicle having remaining capacity of a threshold value or less to travel to the charging area for charging the energy storage member by the ground controller; and
controlling transportation vehicles in the charging area to travel to positions outside the charging area by the ground controller.

Preferably, the charging area is a circulation route for allowing the transportation vehicles to travel along the circulation route, and the charging equipment is provided in the charging area for allowing charging of the energy storage member of the transportation vehicle at a plurality of positions in the charging area. The vehicle placement control unit controls the transportation vehicles in the charging area from a transportation vehicle having an energy storage member charged to a greatest extent to travel to a position outside the charging area. The transportation vehicle having an energy storage member charged to a greater (greatest) extent herein means a transportation vehicle having high remaining capacity or having remaining capacity of a predetermined value or more. More preferably, the charging equipment includes a non-contact electricity feeding line and a power supply for the charging equipment. Charging of the energy storage member is performed while the transportation vehicle is traveling along the circulation route.

In the present invention, when the remaining capacity of the energy storage member becomes a threshold value or less, charging is performed in the charging area, and the vehicle is allocated to travel to the outside of the charging area in accordance with a transportation instruction or the like. The charging equipment is locally provided in the charging area. The charging area is used as a charging space and a waiting space for the transportation vehicles. In this manner, the remaining capacity and waiting of the transportation vehicle can be controlled in an integrated manner. In the invention, the state of the transportation vehicle changes cyclically from (i) to (iii) as follows.
(i) Charging is performed sufficiently, and the remaining capacity is high. Therefore, the transportation vehicle can transport articles.
(ii) The remaining capacity becomes low, and charging is performed in the charging area.
(iii) After charging, the transportation vehicle travels to, e.g., a start position of transportation. In this specification, description regarding the transportation vehicle system is directly applicable to the charging method.

Preferably, the charge control unit provides a small value as the threshold value for a transportation vehicle at a position remote from the charging area and provides a large value as the threshold value for a transportation vehicle at a position close to the charging area. In this manner, no shortage of electricity occurs in the battery, and no traffic jams occur since there are no traveling vehicles that travel at low speed due to shortage of electricity.

Preferably, the energy storage member is a secondary battery formed by connecting unit cells or cell units in series, the transportation vehicle is an overhead traveling vehicle, and configured to report electromotive force and internal resistance, an amount of charged electricity and an amount of discharged electricity and remaining capacity of a secondary battery of each unit cell or each cell unit to the ground controller. The ground controller is configured to detect an overhead traveling vehicle having a secondary battery that requires maintenance. It is preferable to report temperature of the unit cell or the cell unit in addition to electromotive force and internal resistance. The remaining capacitor herein means the remaining capacity of the entire secondary cell, or the remaining capacity of each unit cell or each cell unit. When the overhead traveling vehicle reports electromotive force and internal resistance for each of the unit cells during charging or discharging of the battery, abnormal unit cells or cell units can be detected, if any. Further, by reporting the amount of changes in the remaining capacity of the secondary battery, unit cell, or cell unit relative to the amount of charged electricity or the amount of discharged electricity, it becomes possible to detect whether the secondary battery has been degraded or not and detect the degree of degradation. Therefore, the overhead traveling vehicle having the secondary battery that requires maintenance can be detected reliably.

Preferably, the charging equipment includes a non-contact electricity feeding line and a power supply for the non-contact electricity feeding line, particular, a non-contact electricity feeding line having large electricity feeding capability for allowing rapid charging and a power supply for the non-contact electricity feeding line provided in the charging area and some of straight segments in the travel route outside the charging area. The overhead traveling vehicle is configured to charge the secondary battery in the charging area when the remaining capacity of the secondary battery is the threshold value or less, and charge the secondary battery in the straight segment outside the charging area when the remaining capacity of the secondary battery is the threshold value or more. In the case where rapid charging is performed through the non-contact electricity feeding line, charging of the battery can be performed without requiring the overhead traveling vehicle to stop. That is, the overhead traveling vehicle can stop arbitrarily at any position in the charging area for charging the battery. Further, charging can be performed also in segments outside the charging area, where non-contact electricity feeding lines are provided, for supplementing charging in the charging area. Even if the battery capacity becomes abnormally low, the traveling vehicle can travel to the charging area. In the charging area, charging of the battery is performed taking a long period of time to the extent until the time when allocation of the vehicle becomes necessary, e.g., until the remaining capacity becomes 100%. In contrast, charging of the battery is performed to the extent that traffic jams outside the charging area can be avoided. When the remaining capacity becomes low up to a threshold value, charging of the battery is performed in the charging area. Even in the case where the remaining capacity does not become low up to the threshold value, charging of the battery is performed outside the charging area. It should be noted that when the remaining capacity of the overhead traveling vehicle is high, charging of the battery of the overhead traveling vehicle may not be performed outside the charging area.

Preferably, the overhead traveling vehicle has charging means for charging electricity in the secondary battery using regenerative electricity from the travel motor. By charging the secondary battery using regenerative electricity from the motor of the overhead traveling vehicle, the remaining capacity of the secondary battery does not become low soon, and thus, the number of charging operations can be reduced.

Preferably, the ground controller is configured to reduce the threshold value when occurrence frequency of transportation instructions is high, and increase the threshold value when occurrence frequency of transportation instructions is low. By reducing the threshold value for starting charging in the charging area when occurrence frequency of transportation instructions is high, and increasing the threshold value for starting charging in the charging area when occurrence frequency of transportation instructions is low, charging can be prepared prior to the period in which a large number of transportation instructions are present.

### Brief Description of the Drawings

[FIG. 1]

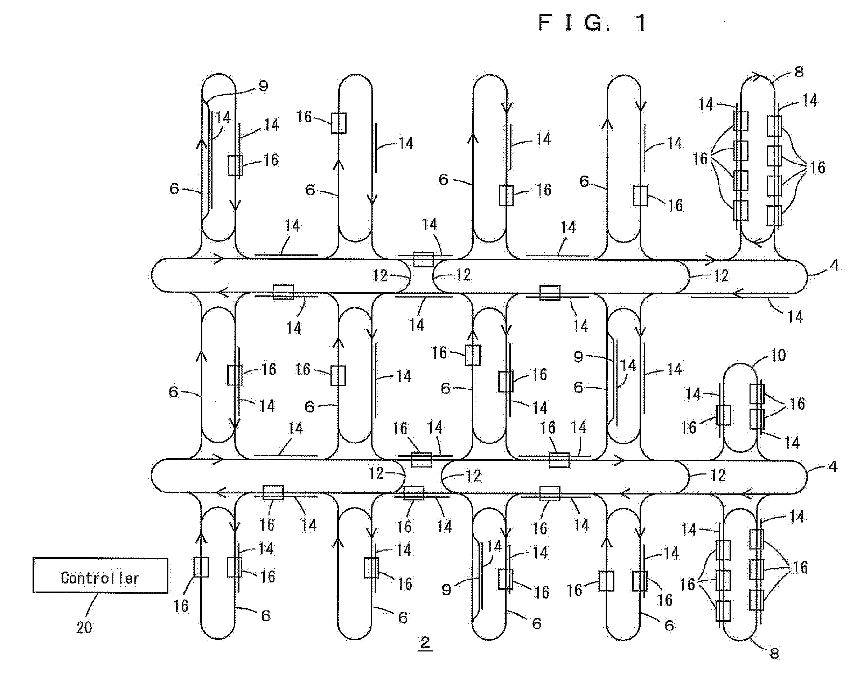

   FIG. 1 is a plan view showing a layout of an overhead traveling vehicle system according to an embodiment.
[FIG. 2]

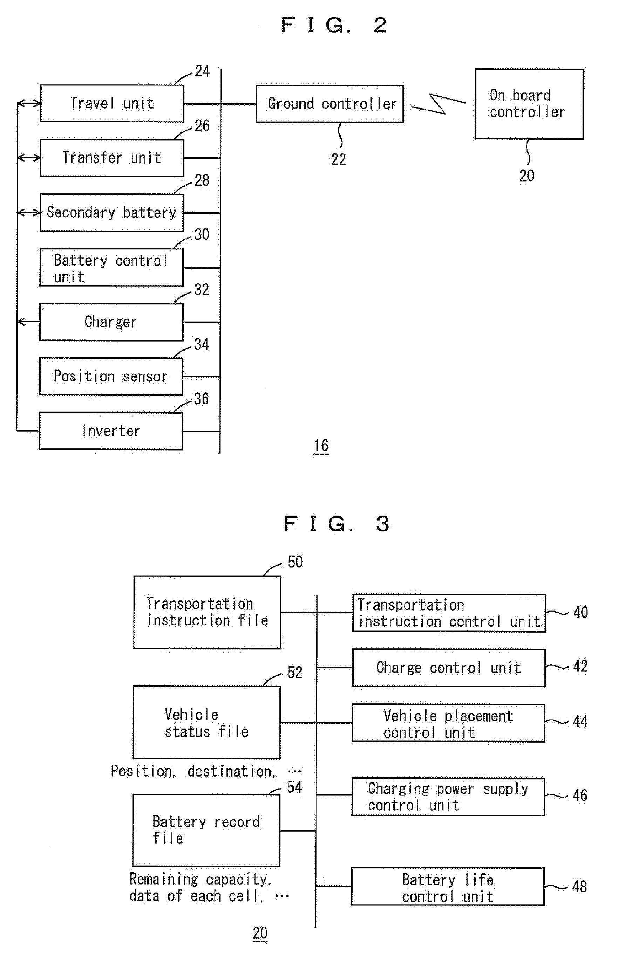

   FIG. 2 is a block diagram showing an overhead traveling vehicle in the embodiment.
[FIG. 3]
   FIG. 3 is a block diagram showing a ground controller in the embodiment.
[FIG. 4]

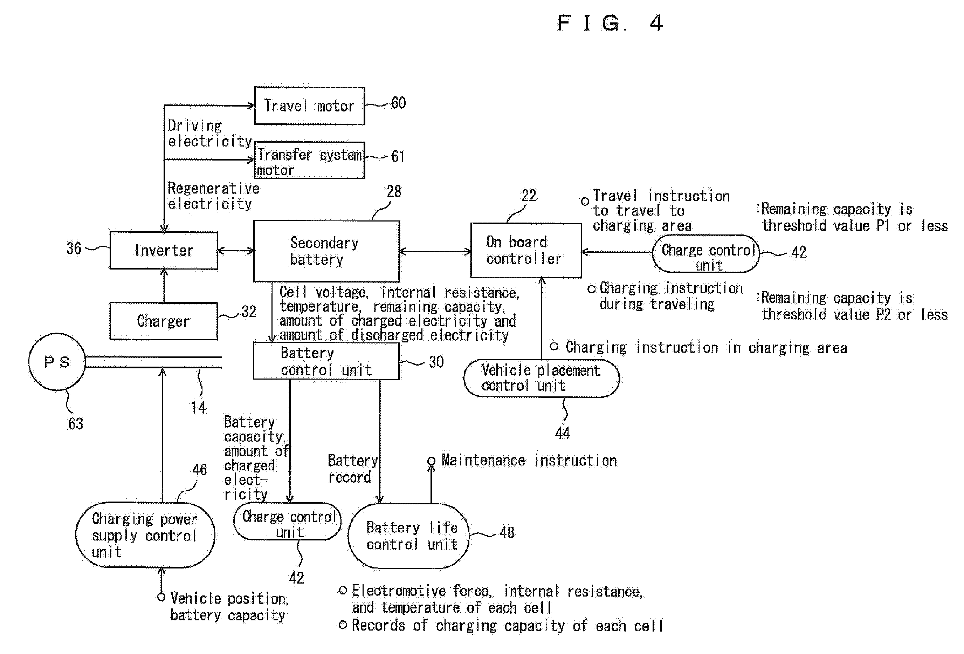

   FIG. 4 is a block diagram showing control of a secondary battery in the embodiment.
[FIG. 5]

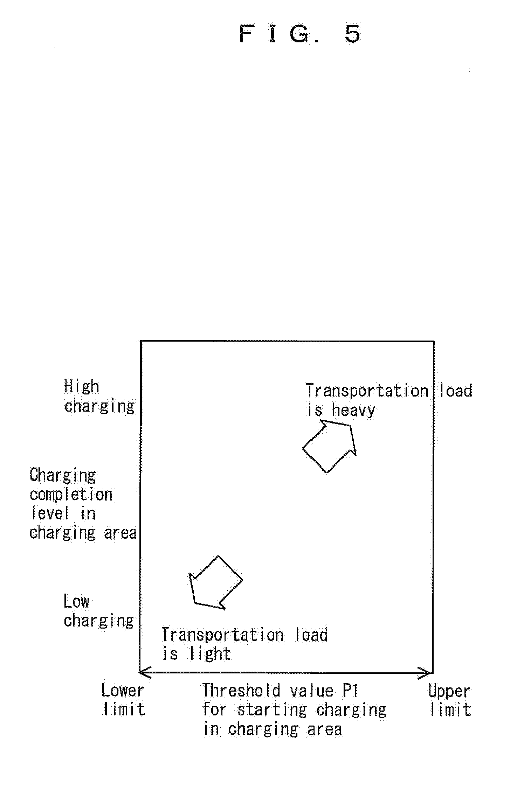

   FIG. 5 is a graph showing a charging rule in the embodiment.
[FIG. 6]

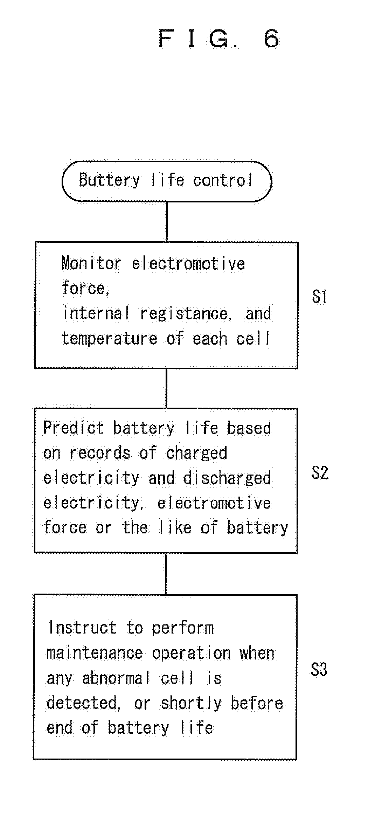

   FIG. 6 is a diagram showing an algorithm for controlling battery life in the embodiment.
[FIG. 7]

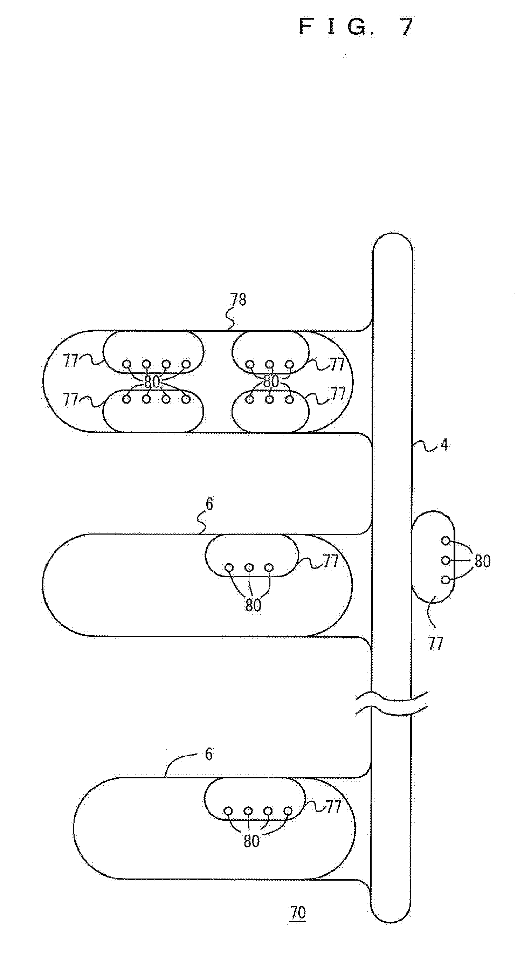

   FIG. 7 is a plan view showing a layout of an overhead traveling vehicle system in a modified embodiment.

Hereinafter, an embodiment in the most preferred form for carrying out the present invention will be described. The scope of the invention shall be determined according to understanding of a person skilled in the art based on the description of the claims in consideration of the description of the specification and techniques known in this technical field.

### Most preferred embodiment

FIGS. 1 to 6 show an overhead traveling vehicle system 2 according to the embodiment. Additionally, the present invention is applicable to a system of rail vehicles that travel on the ground, or a system of non-rail automated transportation vehicles. In the drawings, reference numerals 4 denote intra-bay routes, reference numerals 8 denote charging bay routes, and a reference numeral 10 denotes a maintenance bay route. Reference numerals 12 denote shortcuts provided in the routes 4, 6. The intra-bay routes 6 are connected by inter-bay routes 4. The overhead traveling vehicles 16 can travel between all of the routes 4 to 10. The charging bay route 8 may be used as the maintenance bay route 10. Further, each of the inter-bay route 4, the intra-bay route 6, or the like may include a route 9 dedicated for charging and retraction and a non-contact electricity feeding line 14 for allowing rapid charging. Each of the routes 9 is provided in parallel with the route 4 or the route 6. The route 9 diverges from the route 4, 6 at the entrance, and merges with the route 4, 6 at the exit. Importantly, the routes 8 and 9 include routes dedicated for charging and retraction, and transportation instructions are not obstructed even if the routes 8, 9 are occupied by the overhead traveling vehicles 16 for a long period of time. It is sufficient to provide only one of the charging bay route 8 and the dedicated route 9. In the following description, it is assumed that the charging bay route 8 is provided.

The charging bay route 8 is a circulation route used for charging secondary batteries of the overhead traveling vehicles 16 and used as a space for waiting before allocation of vehicles. Except curve segments, diverging points, and merging points where reception of electricity is difficult, the non-contact electricity feeding line 14 that can be used for rapid charging is provided in the travel route for allowing a plurality of overhead traveling vehicles 16 to receive electricity at the same time. It should be noted that the non-contact electricity feeding line 14 may be provided also in the curve segment or the like. The maintenance bay route 10 is a route for performing maintenance operation of the overhead traveling vehicles 16. The non-contact electricity feeding line 14 that can be used for rapid charging is provided in part of the maintenance bay route 10 for allowing charging during a period in which the overhead traveling vehicle 16 waits for maintenance or during test traveling after the maintenance. No non-contact electricity feeding lines 14 are provided at lifters for elevating and lowering the overhead traveling vehicles 16, in areas for workers to perform maintenance operation for the overhead traveling vehicles 16, in curve segments, and at diverging points and merging points. The non-contact electricity feeding lines 14 are provided in straight segments of the routes 4, 6 in addition to the routes 8, 10 for rapidly charging the secondary batteries of the overhead traveling vehicles 16. Capacitors may be used instead of the secondary batteries. Preferably, lithium ion secondary batteries may be used as the secondary batteries.

A reference numeral 20 denotes a ground controller. The ground controller 20 communicates with the overhead traveling vehicles 16, and allocates transportation instructions to the overhead traveling vehicles 16. Additionally, for example, the ground controller 20 provides instructions regarding traveling to the maintenance bay route 10, charging in the straight segments other than the charging bay route 8, and allocation of vehicles to the routes 4, 6. Further, while the overhead traveling vehicle 16 travels along the routes 4, 6, charging from the non-contact electricity feeding line 14 is performed. Further, at the time of deceleration, the secondary battery is charged using regenerative electricity from motors such as travel motors or elevation motors for transfer of articles. When the remaining capacity of the secondary battery is decreased to a predetermined threshold value or less, in accordance with an instruction from the controller 20, the overhead traveling vehicle 16 travels to the charging bay route 8, and charging of the secondary battery is performed. Then, if a failure occurs in the secondary battery, or any other trouble occurs, and at the time of performing a periodical diagnosis, in accordance with an instruction from the controller 20, the overhead traveling vehicle 16 travels to the maintenance bay route 10, and maintenance operation for the overhead traveling vehicle 16 is performed.

FIG. 2 shows structure of the overhead traveling vehicle 16. An on board controller 22 communicates with the ground controller 20 using a communication device (not shown), and implements overall control of the overhead traveling vehicle 16. The overhead traveling vehicle 16 travels along the travel rail provided in an overhead space using a travel unit 24 having a travel motor or the like. A transfer unit 26 of the overhead traveling vehicle 16 transfers articles to or from load ports, buffers, stockers or the like (not shown), e.g., by lateral movement of an elevation drive unit (not shown), rotation of the elevation drive unit about a vertical axis, elevation of an elevation frame by the elevation drive unit, and opening and closing of chucks provided on the elevation frame. Regenerative electricity of the transfer unit 26 is used to charge the secondary battery 28. For example, the secondary battery 28 is a lithium ion secondary battery. Alternatively, the secondary battery 28 is a nickel hydrogen battery or the like. Charging is performed from the non-contact electricity feeding line 14 through a charger 32 and an inverter 36. Likewise, the travel unit 24 and the transfer unit 26 are driven by the inverter 36, and charging is performed using regenerative electricity. A position sensor 34 detects a position of the overhead traveling vehicle 16 along the routes 4 to 10. The travel unit 24 and the transfer unit 26 implement travel control and transfer control based on position data.

A battery control unit 30 controls a state of the secondary battery 28. The secondary battery 28 is a unit cell (single cell) or the secondary battery 28 is formed by connecting cell units in series. Each of the cell units is formed by connecting a plurality of unit cells in series. For example, electromotive force, internal resistance, and temperature are measured for each of the unit cells or each of the cell units. The internal resistance can be measured based on the change in each voltage when the load is turned on or turned off, or charging is turned on or turned off. Further, the total voltage of the unit cells or the cell units connected in series is regarded as the output voltage of the secondary battery 28. The battery control unit 30 monitors the output voltage of the entire secondary battery 28 or the output voltage of each cell unit, in addition to the states (electromotive force, internal resistance, temperature). Further, at the time of charging electricity in the secondary battery or discharging electricity from the secondary battery, the integrated value of charging electrical current and the integrated value of discharging electrical current are stored. Then, the changes in the states of each unit cell or cell unit associated with the integrated values are stored. The output voltage of the secondary battery may be managed as voltage of the entire battery, or added as voltage in the unit of cell unit. The temperature may be managed as data of each unit cell or cell unit, or may be managed as data of the entire secondary battery.

In most cases, when a trouble occurs in the secondary battery 28, the trouble is not caused by a problem in the entire battery, but caused by a problem in any of unit cells or cell units. The unit cell or the cell unit having such a trouble is inspected in the maintenance bay route 10, and replacement or the like is performed. For this purpose, it is identified which unit cell or the cell unit requires maintenance. In the unit cell having a problem, some signs can be found. For example, electromotive force becomes low, internal resistance is increased, temperature is increased, or capacity is reduced. The remaining capacity of the secondary battery 28 (ratio between the actual capacity and the capacity when the secondary battery is charged to the maximum level) can be presumed from the output voltage or electromotive force, internal resistance, temperature, and the integrated value of the charged current and the integrated value of the discharged current in the past. The capacity (maximum capacity) when the secondary battery is charged to the maximum level can be presumed from information as to how the remaining capacity has been changed relative to the integrated value of the charging electrical current or the integrated value of the discharging electrical current. That is, when the maximum capacity becomes low, the change in the remaining capacity relative to the charged electricity or the discharged electricity becomes large, and thus, the remaining capacity can be determined from the change in the electromotive force, the change in the internal resistance or the like. Instead of integrating the charging electrical current or the discharging electrical current, the charging time can be used on assumption that charging and discharging are performed using electrical current at a constant level.

FIG. 3 shows structure of the ground controller 20. A transportation instruction control unit 40 allocates transportation instructions to the overhead traveling vehicles 16 in response to transportation requests from a host controller (not shown), and executions of the transportation instructions. A charge control unit 42 controls remaining capacity of the secondary battery 28 for each of the overhead traveling vehicles 16. When the remaining capacity of the secondary battery 28 is a predetermined threshold value P1 or less, the charge control unit 42 provides an instruction to the overhead traveling vehicle 16 to travel to the charging bay route 8 for charging the secondary battery 28. When the remaining capacity of the secondary battery 28 is a predetermine threshold value P2 or less, the charge control unit 42 instructs charging of the secondary battery 28 from the non-contact electricity feeding lines 14 provided in straight segments of the routes 4, 6. It should be noted that the threshold value P1 is, e.g., about 20 to 40%, and the threshold value P2 is, e.g., about 30 to 60%. The threshold value P2 is larger than the threshold value P1. Preferably, the threshold value P1 gets larger in a direction away from the charging bay route 8, and the threshold value P2 gets smaller in a direction toward the charging bay route 8. Charging may be performed all the time if the threshold value P2 is 100%, and there is any non-contact electricity feeding line 14 facing the routes 4 and 6.

A vehicle placement control unit 44 allocates the overhead traveling vehicles 16 from the charging bay route 8 to travel to the routes 4, 6, for assigning instructions to the overhead traveling vehicles 16. For example, by adopting a first-in first-out method for the overhead traveling vehicles 16 that enter the charging bay route 8, allocation of the overhead traveling vehicles 16 can be performed preferentially from the overhead traveling vehicle 16 charged to the greatest extent among the overhead traveling vehicles 16 in the charging bay route 8. By designing the charging bay route 8 as a circulation route as shown in FIG. 1, the overhead traveling vehicles 16 having the remaining capacity of a predetermined value or more is selected for allocating the vehicle to travel to a designated position. Though the target remaining capacity in the charging bay route 8 is 100%, the overhead traveling vehicle 16 having the remaining capacity of less than 100% may be allocated as necessary. A charging power supply control unit 46 controls the power supply for the non-contact electricity feeding lines 14. In particular, the charging power supply control unit 46 implements control such that electricity is supplied only to the overhead traveling vehicles 16 traveling along the non-contact electricity feeding lines 14 provided in the routes 4, 6.

A battery life control unit 48 controls the life of the secondary battery. The battery control unit 30 of the overhead traveling vehicle 16 determines electromotive force, internal resistance, and temperature of each of the unit cells or each of the cell units, and determines the relationship between the remaining capacity and the amount of charged electricity and the amount of discharged electricity. These items of data are inputted into the battery life control unit 48 through the on board controller 22 or the like to identify which unit cell or cell unit requires maintenance. Further, for example, based on the change in the maximum capacity of the entire secondary battery, the remaining battery life is detected. Only one of the amount of charged electricity and the amount of discharged electricity may be controlled instead of controlling both of the amount of charged electricity and the amount of discharged electricity. In this manner, necessity of maintenance is determined for each of the unit cells or for each of the cell units of the secondary battery, or for the entire secondary battery. Based on these items of data, the battery life control unit 48 instructs the overhead traveling vehicle having the secondary battery that requires maintenance to travel to the maintenance bay route 10. The ground controller 20 is a computer. The transportation instruction control unit 40, the charge control unit 42, the vehicle placement control unit 44, the charging power supply control unit 46, and the battery life control unit 48 may be realized by dedicated hardware, or may be realized by a memory and a CPU of the computer and software or the like.

Transportation instructions and information regarding executions of the transportation instructions are stored in a transportation instruction file 50 of the ground controller 20. Current positions, velocities, destinations, presence or absence of assigned transportation instructions, and other vehicle information for the overhead traveling vehicles 16 are stored in a vehicle status file 52. Records of changes in electromotive force, internal resistance, temperature, and records of changes in the amount of charged electricity and the amount of discharged electricity, and remaining capacity or the like are stored in a battery record file 54. These items of data are part of vehicle information of the overhead traveling vehicles 16, and may be stored in the vehicle status file 52.

FIG. 4 shows the secondary battery 28 and a manner of controlling the secondary battery 28. Charging from the non-contact electricity feeding line 14 to the secondary battery 28 is performed by an inverter 36 using a charger 32. A reference numeral 63 denotes a high frequency power supply for supplying electricity to the non-contact electricity feeding line 14. By the output from the secondary battery 28, or in each segment where the non-contact electricity feeding line 14 is present, by electricity from the electricity feeding line 14, the inverter 36 drives the travel motor 60 and the motor 61 in the transfer system such as an elevation motor. Further, in any segment, regenerative electricity from the motors 60, 61 or the like can be used for charging the secondary battery 28. The battery control unit 30 controls the remaining capacity, and the amount of charged electricity and the amount of discharged electricity or the like in the entire secondary battery 28, and reports these items of information to the charge control unit 42 and the battery life control unit 48. Based on the remaining capacity of the secondary battery 28, the charge control unit 42 instructs charging of the secondary battery 28 in a charging area or charging of the secondary battery 28 during traveling. Further, the battery life control unit 48 instructs to perform maintenance operation in the maintenance bay route, and which overhead traveling vehicle 16 requires maintenance and what kind of maintenance operation should be performed for the secondary battery of the overhead traveling vehicle 16 are displayed on a monitor of the ground controller 20 for allowing an operator to perform the maintenance operation. A charging power supply control unit 46 starts or stop supply of electricity to the non-contact electricity feeding lines 14 provided in straight segments of the routes 4, 6.

FIG. 5 shows a rule of charge control. Magnitude of a transportation load is one parameter indicating a state of the entire overhead transportation vehicle system 2. For example, this parameter is an occurrence frequency of transportation instructions, or a prediction value of the occurrence frequency. If the transportation load is heavy, priority is given to transportation rather than charging in the charging bay route 8. If the transportation load is small, charging of overhead traveling vehicles 16 as many as possible is performed in advance in the charging bay route 8. In this manner, charging is performed when the transportation load is light to prepare for the period in which the transportation load is heavy. For this purpose, when the transportation load is heavy, the threshold value P1 for starting charging in the charging bay route (charging area) is reduced to, e.g., the lower limit of about 20%. When the transportation load is light, the threshold value P1 for starting charging is increased to, e.g., the upper limit of about 40%. Charging in the charging area is finished when, e.g., the remaining capacity is 100%. The vehicle placement control unit 44 can allocate the overhead traveling vehicles 16 with the remaining capacity having a predetermined value or more, e.g., 60% or more, 80% or more or the like. Therefore, when the transportation load is heavy, even if the charging level is relatively low, allocation of the overhead traveling vehicle 16 is performed, and when the transportation load is light, charging of the overhead traveling vehicle 16 is performed up to 100%.

FIG. 6 is a diagram showing an algorithm for controlling battery life. In step 1, electromotive force, internal resistance, and temperature or the like of each unit cell are monitored, and it is detected whether there is any unit cell or cell unit having a failure. In step 2, change in the maximum capacity of the battery is detected based on the records of charged electricity and discharged electricity, electromotive force, internal resistance, temperature or the like of the battery. If a failure occurs in a unit cell or a cell unit, or if the maximum capacity of the battery becomes low as a whole, the overhead traveling vehicle 16 is instructed to travel to the maintenance bay route 10 to receive maintenance operation.

In the embodiment, the following advantages are obtained.
(1) Problems in connection with charging of the secondary battery, and waiting and allocation of the overhead traveling vehicle are solved together.
(2) Since charging is performed in the charging bay route 8, unlike the case where vehicles stop in the routes 4, 6 for charging, no traffic jam occurs. Further, once charging is started, it continues until sufficient amount of electricity is charged, and the battery capacity becomes high efficiently.
(3) Since non-contact electricity feeding lines 14 are also provided in straight segments of the normal routes 4, 6, charging can be performed while the overhead traveling vehicle 16 is traveling. Further, even if shortage of electricity in the battery occurs, traveling of the overhead traveling vehicle 16 is assisted for allowing the overhead traveling vehicle 16 to travel to the charging bay route. It is sufficient to provide the non-contact electricity feeding lines 14 only in the straight segments, and only in the segments where a large number of overhead traveling vehicles 16 are present.
(4) The state of the secondary battery 28 is monitored for each of the unit cells or each of the cell units, and the change in the maximum capacity of the secondary battery is monitored as well. In this manner, maintenance operation can be performed suitably, and it is ensured that all of the overhead traveling vehicles can travel continuously without running out of electricity in the battery.

In the embodiment, non-contact electricity feeding line 14 is used for charging the secondary battery. Alternatively, a plurality of contact type chargers may be provided on the ground for each charging bay route 8, and a charging coupler may be provided on the overhead traveling vehicle. In this case, the overhead traveling vehicle is stopped, and the charging coupler is connected to the charger for charging the secondary battery. The contact type charger is advantageous in that large electrical current can be used for charging in comparison with non-contact electricity feeding. However, if the charger is provided, since the overhead traveling vehicles 16 are moved forward to reduce the inter-vehicle distance for space saving, charging needs to be interrupted frequently. Further, if the charging coupler is provided in the routes 4, 6, the overhead traveling vehicles 16 stop for charging in the routes 4, 6, and traffic jams may occur.

FIG. 7 shows an overhead traveling vehicle system 70 in a modified embodiment. The overhead traveling vehicle system 70 is the same as the overhead traveling system shown in FIGS. 1 to 6, excepts the points particularly specified, and description of the overhead traveling vehicle 16, the ground controller 20 or the like is omitted. Instead of providing the dedicated charging bay route 8, a large number of charging routes 77 are provided. Each of the charging routes 77 has both ends connected to the inter-bay route 45 or the intra-bay routes 6, 78 to form a loop. A large number of chargers 80 are provided, and the overhead traveling vehicles 16 can circulate along the loop. The charging route 77 may be provided inside the routes 4 and 6, and may be provided outside the routes 4 and 6. A contact type charging coupler is provided in the overhead traveling vehicle 16. The number of the charging routes 77 in the intra-bay route 78 is larger than the number of the charging routes 77 in the other routes 4 and 6, and the intra-bay route 78 is used as the charging bay route 8 in the embodiment. It should be noted that the intra-bay route 78 is also used as the intra-bay route having normal load ports or the like. In this manner, even in the case where no dedicated charging routes 8 are provided, the intra-bay route can have the function of the charging route 8 as well.

If the remaining battery capacity is lowered to the threshold value or less, charging is basically carried out in the intra-bay route 78. Since a large number of charging routes 77 are present in the route 78, the overhead traveling vehicles at front positions of the routes 7 return to work normally, from the overhead traveling vehicle charged to the greatest extent. Then, in any of the routes 7 having an empty space, charging of a new overhead traveling vehicle is started. Further, when the new overhead traveling vehicle enters the route 77, the stop position is changed for using the charger 80 on the front side for space saving. The intra-bay route 78 is also used as waiting space for the overhead traveling vehicle.

The charging routes 77 in the routes 4, 6 are used as the waiting space for the overhead traveling vehicle regardless of the amount of charging capacity of the overhead traveling vehicle. Further, when an overhead traveling vehicle 16 that requires charging comes to the charging route 77, the ground controller 20 issues an instruction to move the overhead traveling vehicle which is currently being charged out of the charging route 77 to make an empty space, i.e., an empty charger for the new overhead traveling vehicle that requires charging.

### Description of the numerals

- 2, 70:: overhead traveling vehicle system
- 4:: inter-bay route
- 6, 78:: intra-bay route
- 8:: charging bay route
- 9:: route
- 10:: maintenance bay route
- 12:: short cut
- 14:: non-contact electricity feeding line
- 16:: overhead traveling vehicle
- 20:: ground controller
- 22:: on board controller
- 24:: travel unit
- 26:: transfer unit
- 28:: secondary battery
- 30:: battery control unit
- 32:: charger
- 34:: position sensor
- 36:: inverter
- 40:: transportation instruction control unit
- 42:: charge control unit
- 44:: vehicle placement control unit
- 46:: charging power supply control unit
- 48:: battery life control unit
- 50:: transportation instruction file
- 52:: vehicle status file
- 54:: battery record file
- 60:: travel motor
- 61:: transfer system motor
- 63:: power supply
- 77:: charging route
- 80:: charger

## Claims

1. A transportation vehicle system for transporting articles between load ports, comprising a plurality of transportation vehicles for transporting articles having an energy storage member as a power supply;
a predetermined travel route;
a ground controller; and
at least a charging area provided in the travel route and having charging equipment for the energy storage member;
wherein the transportation vehicles travel along the travel route under control of the ground controller with energy stored in the energy storage member;
wherein the transportation vehicles have communication means for reporting to the ground controller positions and remaining capacities of the energy storage member;
wherein the ground controller has a charge control unit for controlling transportation vehicles having the remaining capacities of the energy storage member not more than a threshold value to travel to the charge area for charging the energy storage members and a vehicle placement control unit for controlling transportation vehicles in the charging area to travel to positions outside the charging area.

2. The transportation vehicle system according to claim 1, the charge control unit having generation means for generating the threshold value dependent upon distances between positions of the transportation vehicles and the charging area in such a way that when the distance is relatively large, a relatively large threshold is generated, and when the distance is relatively small, a relatively small threshold is generated.

3. The transportation vehicle system according to claim 1, the energy storage member being unit cells of a secondary battery in series or cell units of a secondary battery in series, the transportation vehicles being an overhead traveling vehicles, and the communication means reporting electromotive forces and internal resistances of each unit cell or each cell unit, and an amount of charged electricity and an amount of discharged electricity and the remaining capacity of the secondary battery to the ground controller; and
the ground controller having a means for detecting an overhead traveling vehicle having a secondary battery that requires maintenance.

4. The transportation vehicle system according to claim 3, the charging equipment comprising a non-contact electricity feeding lines and power supplies for the non-contact electricity feeding lines, the charging equipment being provided in the charging area and in straight segments in the travel route outside the charging area,
the charge control unit controlling the overhead traveling vehicles to charge the secondary battery in the charging area when the remaining capacity of the secondary battery is the threshold value or less,
and the traveling vehicles being configured to charge the secondary battery in the straight segments outside the charging area when the remaining capacity of the secondary battery is the threshold value or more.

5. The transportation vehicle system according to claim 3, the overhead traveling vehicle having charging means for charging the secondary battery with regenerative electricity from the travel motor.

6. The transportation vehicle system according to claim 3, wherein the generation means reduces the threshold value when occurrence frequency of transportation instructions is relatively high, and increases the threshold value when occurrence frequency of transportation instructions is relatively low.

7. The transportation vehicle system according to claim 1, the charging area comprising a circulation route for allowing the transportation vehicles to travel along the circulation route, and the charging equipment provided at a plurality of positions in the circulation rout,
wherein the vehicle placement control unit controls a transportation vehicle in the charging area having an energy storage member relatively highly charged to travel outside the charging area.

8. The transportation vehicle system according to claim 7, the charging equipment comprising non-contact electricity feeding lines and power supplies for the charging lines.

9. A charging method for a transportation vehicle system for transporting articles between load ports, the transportation vehicle system comprising a plurality of transportation vehicles for transporting articles having an energy storage member as a power supply;
a predetermined travel route;
a ground controller; and
at least a charging area provided in the travel route and having charging equipment for the energy storage member;
the charging method comprising the steps of:
reporting positions and remaining capacities of the energy storage member to the ground controller by the transportation vehicles;
controlling transportation vehicles having the remaining capacities of the energy storage member not more than a threshold value to travel to the charge area for charging the energy storage members by the ground controller; and
controlling transportation vehicles in the charging area to travel to positions outside the charging area by the ground controller.

10. The charging method for the transportation vehicle system according to claim 9, the charging area comprising a circulation route for allowing the transportation vehicles to travel along the circulation route, and the charging equipment provided at a plurality of positions in the circulation rout; and
the ground controller controlling a transportation vehicle in the charging area having an energy storage member relatively highly charged to travel outside the charging area.
